(19) Europäisches Patentamt
European Patent Office
Office européen des brevets

(11) Veröffentlichungsnummer: **0 132 515**
**B1**

# (12) EUROPÄISCHE PATENTSCHRIFT

(45) Veröffentlichungstag der Patentschrift: **10.12.86**

(51) Int. Cl.⁴: **C 08 G 18/80**, C 08 G 18/79, C 08 G 18/73, C 09 D 3/72

(21) Anmeldenummer: **84104674.1**

(22) Anmeldetag: **26.04.84**

(54) **Pulverförmige Überzugsmittel.**

(30) Priorität: **24.06.83 DE 3322719**

(43) Veröffentlichungstag der Anmeldung: **13.02.85 Patentblatt 85/7**

(45) Bekanntmachung des Hinweises auf die Patenterteilung: **10.12.86 Patentblatt 86/50**

(84) Benannte Vertragsstaaten: **AT BE CH DE FR GB IT LI NL SE**

(56) Entgegenhaltungen:
**EP - A - 0 000 963**
**FR - A - 2 259 885**
**US - A - 3 631 198**

**Die Akte enthält technische Angaben, die nach dem Eingang der Anmeldung eingereicht wurden und die nicht in dieser Patentschrift enthalten sind.**

(73) Patentinhaber: **HÜLS AKTIENGESELLSCHAFT, Patentabteilung / PB 15 - Postfach 13 20, D-4370 Marl 1 (DE)**

(72) Erfinder: **Gras, Rainer, Dr., Im Ostholz 49a, D-4630 Bochum 5 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 132 515 B1

ACTORUM AG

**Beschreibung**

Die vorliegende Erfindung betrifft den Einsatz von mit bekannten Blockierungsmitteln blockierten isocyanurat- oder urethangruppenaufweisenden Lackpolyisocyanaten auf Basis von 2-Methylpentandiisocyanat-1.5 (MPDI) und/oder 2-Ethyl-butandiisocyanat-1.4 (EBDI) zur Herstellung von in der Hitze härtbaren Polyurethan-Pulverlacken.

Polyurethan-Pulverlacke auf Basis von partiell oder total blockierten Polyisocyanaten und hydroxylgruppenaufweisenden Polymeren, deren Erweichungspunkt oberhalb 40°C liegt, gehören zum Stand der Technik und werden in der Literatur vielfach beschrieben, wie z.B. in den DE-OSS 2 105 777, 2 542 191, 2 735 497, 2 842 641, 3 004 876, 3 039 824 oder 3 128 743.

Polyurethan-Pulverlacke bestehen im wesentlichen aus einer hydroxylgruppentragenden Komponente und einem Polyisocyanat, dessen NCO-Gruppen mit einem Blockierungsmittel teilweise oder vollständig blockiert sind, so dass die OH/NCO-Polyadditionsreaktion bei Temperaturen unterhalb 140°C nicht ablaufen kann. Erst nach dem Erhitzen auf Temperaturen ≥ 150°C lassen sich derartige Pulverlacke innerhalb relevanter Zeit unter Freisetzen des Blockierungsmittes und Umsetzung der OHmit den NCO-Gruppen zu einem Lackfilm vernetzen.

Nicht alle Polyisocyanate sind für derartige Zwecke geeignet und im Hinblick auf ihre Anwendung als Pulvermaterialien gibt es nicht wenige Einschränkungen, insbesondere dann, wenn die mit den üblichen Blockierungsmitteln blockierten — partiell oder total — Polyisocyanate selbst solche Kenndaten aufweisen, die die Mahlbarkeit erschweren, so ist ihr Einsatz in Pulverlacken in hohem Masse eingeschränkt, wenn nicht gar unmöglich, selbst wenn ihre lacktechnischen sowie chemischen und physikalyschen Kenndaten noch so gut sein mögen.

So hat es nicht an Versuchen gemangelt, Hexamethylendiisocyanat-1.6 (kurz: HDI) und/oder seine Addukte in blockierter Form für Polyurethan-Pulverlacke zu verwenden. In der DE-OS 3 033 860 bzw. EP 0 047 452 wird auf Seite 8 die richtige Feststellung getroffen, dass Produkte mit überwiegendem Anteil an HDI (es handelt sich dabei um Mischtrimerisate aus HDI und Isophorondiisocyanat), also folglich auch reines HDI-Trimerisat, bei Raumtemperatur flüssige Produkte sind. Auf Seite 19 wird richtig festgestellt, das es unmöglich ist, ausschliesslich durch Isocyanuratgruppenbildung unabhängig vom Trimerisierungsgrad modifiziertes HDI als Pulverhärter einzusetzen. Es war für die Pulverlackanwendung eine Kombination aus HDI/IPDI zur Schmelzpunkterhöhung notwendig.

Es wurde nun überraschenderweise gefunden, dass sich aus 2-Methyl-pentandiisocyanat-1.5 (MPDI) oder einem Gemisch von überwiegend MPDI und 2-Ethyl-butandiisocyanat-1.4 (EBDI), mit der Zusammensetzung

88-99 Gew.-% 2-Methyl-pentandiisocyanat-1.5 (MPDI)

12- 1 Gew.-% 2-Ethyl-butandiisocyanat-1.4 (EBDI)

Trimerisate (Isocyanatoisocyanurat) in Abhängigkeit vom Trimerisierungsgrad mit einem NCO-Gehalt von 14-21 Gew.-%, verzugsweise 15,5-19,5 Gew.-% oder Urethanaddukte basierend auf der Umsetzung mit tetra- oder höherfunktionellen Polyolen wie Di-Trimethylolpropan, Pentaerythrit, Sorbit u.a. mit einem NCO-Gehalt von 10-22 Gew.-%, vorzugsweise von 12-19 Gew.-% mit Blockierungsmitteln, insbesondere ε-Caprolactam und/oder 1H-1.2.4-Triazol, blockierte Polyisocyanate herstellen lassen, die in spröder, mahlbarer Form entstehen und somit in Pulverlacken zusammen mit Polyolverbindungen, insbesondere hydroxylgruppenhaltigen Polyestern, einsetzbar sind.

Die erfindungsgemässen blockierten Addukte weisen einen latenten NCO-Gehalt von 7-18 Gew.-%, vorzugsweise von 9,5-16 Gew.-% und einen freien NCO-Gehalt von ≤ 2 Gew.-%, vorzugsweise ≤ 1 Gew.-% auf.

Als hydroxylgruppentragende Polymere kommen Epoxidharze, Acrylate und insbesondere Polyester auf Basis von überwiegend aromatischen Dicarbonsäuren, Diolen und Triolen infrage.

Die erfindungsgemässen blockierten Polyisocyanate und die hydroxylgruppentragenden Polymere werden gegebenenfalls unter Zumischung der in der PUR-Chemie üblichen Zusätze mit bekannten Technologien zu sprühfertigen Pulvern formuliert, mittels elektrostatischem Auftrag appliziert und zwischen 140°C und 250°C, vorzugsweise 160°C und 200°C eingebrannt.

Das erfindungsgemässe Mischungsverhältnis lässt sich in weiten Grenzen veriieren. Die besten lacktechnischen Kenndaten werden erhalten, wenn das Bindemittelverhältnis aus 9-45 Gew.-% Vernetzer und 91-55 Gew.-% Polyester besteht, wobei das OH/NCO-Verhältnis von 1:0,8-1:1,2, vorzugsweise 1:0,95-1:1,1 eingestellt werden kann. Besonders empfehlenswert ist, pro OH-Äquivalent der Polyhydroxylverbindung ein Äquivalent NCO des Vernetzes einzusetzen.

Die Herstellung der Trimerisate aus MPDI oder dem Gemisch aus MPDI/EBDI erfolgte in bekannter Weise nach den Angaben der GB-PS 1 391 066, DE-OSS 2 325 826, 2 644 684 oder 2 916 201. Die Verfahrensprodukte bestehen aus Isocyanatoisocyanurat mit gegebenenfalls höheren Oligomeren und weisen einen NCO-Gehalt von 14-21 Gew.-%, vorzugsweise 15,5-19,5 Gew.-%, auf, der durch das Blockieren mit an sich bekannten Blockierungsmitteln, insbesondere ε-Caprolactam und 1.H-1.2.4-Triazol auf einen NCO-Gehalt von ≤ 2 Gew.-%, vorzugsweise ≤ 1 Gew.-%, herabgesetzt wird.

Die Trimerisierung kann in Substanz oder in inertem organischen Lösungsmittel vorgenommen werden. Die katalytische Reaktion sollte abgebrochen werden, sobald der NCO-Gehalt der Mischung erkennen lässt, dass 30-50% der NCO-Gruppen sich umgesetzt haben. Das nicht umgesetzte Diisocyanat wird anschliessend gemeinsam mit dem Katalysator und gegebenenfalls mit den Lösungsmitteln abgetrennt.

Die Verfahrensprodukte können auch auf Basis von tetra- oder höherfunktionellen Polyolen, wie

Di-Trimethylolpropan, Pentaerythrit, Sorbit usw. in Kombination mit MPDI oder dem MPDI/EBDI-Gemisch hergestellt werden. Sie weisen einen NCO-Gehalt vor der Umsetzung mit Blockierungsmitteln von 10-22 Gew.-%, vorzugsweise von 12-19 Gew.-%, und nach der Blockierung von ≤ 2 Gew.-%, vorzugsweise ≤ 1 Gew.-%, auf. Die Reaktionspartner werden dabei vorzugsweise in solchen Gewichtsverhältnissen umgesetzt, dass pro OH-Gruppe des Polyols 0,8-1 NCO-Gruppe des Polyisocyanats umgesetzt wird.

Zur Durchführung der Blockierungsreaktion wird die Isocyanatkomponente vorgelegt und das Blockierungsmittel portionsweise zugegeben. Die Umsetzung erfolgt bei Temperaturen unterhalb der Aufspalttemperatur bei 90-130°C. Auch können für die Isocyanat-Polyadditionsreaktion die in der PUR-Chemie üblichen Katalysatoren zugesetzt werden in einer Menge von 0,001-1 Gew.-%, bezogen auf das Gesamtgemisch.

Geeignete Blockierungsmittel sind beispielsweise Phenole, Alkohole, Acetessigsäureethylester, Lactone, insbesondere ε-Caprolactam sowie Triazole, insbesondere das den Schmelzpunkt erhöhende 1H-1.2.4-Triazol.

Die erfindungsgemässen Verfahrensprodukte werden bei ihrer Verwendung als Vernetzer für Polyurethan-Pulverlacke mit den üblichen Harzen für Pulverlacke auf Polyuretanbasis, d.h. vorzugsweise mit hydrxylgruppenhaltigen Harzen kombiniert.

Als hydroxylgruppenhaltige Harze kommen insbesondere Polyester, Epoxidharze sowie hydroxylgruppenhaltige Acrylate mit einem Molekulargewicht von 800-10 000, vorzugsweise 1200-5000, einer Hydroxylzahl von 20-150 mg KOH/g, vorzugsweise 30-100 mg KOH/g und Schmelzpunkten oberhalb 60°C, vorzugsweise zwischen 70°C und 100°C in Betracht.

Für die Herstellung von Pulverlacken eignen sich bevorzugt die Polyester der Terephthalsäure mit den Alkoholen Hexandiol-1.6 , Neopentylglykol, 1.4-Dimethanolcyclohexan und 2.2.2-Trimethylolpropan.

Die einsetzbaren Epoxidharze sind in der DE-OS 2 945 113, Seite 12, Zeile 1 bis Seite 13, Zeile 26 aufgeführt.

Geeignete Polyacrylate werden in der DE-OS 3 030 539, Seite 14, Zeile 21 bis Seite 15, Zeile 26 beschrieben.

Die hydroxylgruppenhaltigen Harze werden in solchen Mengen eingesetzt, dass das OH/NCO-Verhältnis 1:0,8-1:1,2, vorzugsweie 1:0,95-1:1,1 beträgt. Beim Einsatz von Epoxiden empfiehlt sich ein OH/NCO-Verhältnis von 1:0,25-1:0,75, vorzugsweise von 1:0,35-1:0,55.

Zu den üblichen Hilfs- und Zusatzstoffen zählt man Verlaufmittel, Pigmente, Farbstoffe, Füllstoffe, Katalysatoren, Thioxotropiermittel, UV- und Oxidationsstabilisatoren. Die Menge dieser Stoffe kann, bezogen auf die Menge des festen Bindemittels, innerhalb eines weiten Bereichs schwanken.

Die Herstellung der pulverförmigen Überzugsmittel erfolgt z.B., indem man die festen Harze, Polyester und/oder Epoxidharz und/oder Acrylatharz und die blockierten Polyisocyanate, gegebenenfalls in Kombination mit den erforderlichen Zusätzen, in den genannten Mengenverhältnissen mischt und bei erhöhter Temperatur extrudiert. Diese Temperatur muss oberhalb des Schmelzpunktes von Polyester/Epoxid/Acrylat oder blockiertem Polyisocyanat, aber unterhalb der Aufspalttemperatur der Vernetzer liegen.

Nach dem Extrudieren wird abgekühlt und auf eine Korngrösse kleiner als 0,25 mm, vorzugsweise < 100 µm gemahlen. Anschliessend werden gegebenenfalls die grösseren Fraktionen durch Siebung entfernt und zur Mühle zurückgeführt.

Die Applikation des sprühfertigen Pulvers auf die zu überziehenden Körper kann nach bekannten Methoden erfolgen, z.B. durch elektrostatisches Pulverspritzen oder elektrostatisches Wirbelsintern. Anschliessend werden die lackierten Gegenstände 60 Minuten bis 1 Minute im Temperaturbereich von 140° bis 250°C, vorzugsweise 30 bis 8 Minuten zwischen 160° und 200°C eingebrannt.

Zur Beschichtung mit den erfindungsgemässen pulverförmigen Überzugsmittelm eignen sich alle Substrate, die die angegebenen Härtungsbedingungen ohne Einbusse der mechanischen Eigenschaften vertragen, z.B. Metalle, Glas, Keramik oder Kunststoff.

Die erhaltenen Polyurethan-Pulverlacke zeichnen sich gegenüber den bekannten durch ein verbessertes Verhalten gegenüber Hitze, UV- und chemischen Einflüssen aus.

*Experimenteller Teil*

A *Herstellung der blockierten Polyisocyanate*

*Beispiel 1*

1000 Gew.-T. MPDI/EBDI-Gemisch (94:6) und 0,1 Gew.-T. Katalysator (Triethylendiamin/Propylenoxid 1:1) wurden unter intensivem Rühren miteinander bei 80°C gemischt. Dabei trat sofort eine Wärmetönung auf, wobei die Temperatur des Reaktionsgemisches auf ca. 95°C anstieg. Bei dieser Temperatur wurde das Reaktionsgemisch noch 20 Minuten erhitzt. Während dieser Zeit fiel der NCO-Gehalt auf 37,5 Gew.-%. Zur Entfernung des nicht umgesetzten Diisocyanatgemisches wurde das Reaktionsgemisch bei 160°C/1.33 mbar in einem Dünnschichtverdampfer destilliert. Das Reaktionsprodukt — Isocyanatoisocyanurat (Rückstand der Dünnschichtverdampfung) — hatte einen NCO-Gehalt von 19,3 Gew.-% und einen Monomergehalt von < 0,7 Gew.-%.

1a) Die Blockierung von 300 Gew.-T. Isocyanatoisocyanurat mit 156,1 Gew.-T. ε-Caprolactam bei 90-130°C führt zu einem spröden, mahlbaren Produkt mit einem Schmelzbereich von 58-62°C. Der freie NCO-Gehalt lag bei < 0,6 Gew.-% und der latente NCO-Gehalt (praktisch) bei 12,2 Gew.-%.

1b) Die Blockierung von 200 Gew.-T. Isocyanatoisocyanurat mit 1H-1.2.4-Triazol bei 90-130°C ergab ein sprödes, mahlbares Festprodukt mit einem Schmelz bereich von 65-70°C. Der freie NCO-Gehalt war < 1 Gew.-% und der latente (praktisch) NCO-Gehalt 14,1 Gew.-%.

*Beispiel 2*

Entsprechend dem in Beispiel 1 beschriebenen Verfahren wurden 500 Gew.-T. MPDI/EBDI-Gemisch (94:6) trimerisiert bis zu einem NCO-Gehalt von 34,5 Gew.-%. Das nach der Dünnschichtdestillation isolierte Isocyanatoisocyanurat hatte einen NCO-Gehalt von 17,3 Gew.-% und einen Monomergehalt von < 0,7 Gew.-%.

2a) Die Blockierung von 250 Gew.-T. Isocynatoisocyanurat mit 116,5 Gew.-% ε-Caprolactam bei 90-130°C ergab einen spröden, mahlbaren Feststoff mit einem Schmelzbereich von 69-74°C. Der freie NCO-Gehalt lag bei < 0,7 Gew.-% und der praktische latente NCO-Gehalt bei 11,5 Gew.-%.

*Beispiel 3* (Vergleich)

Entsprechend dem in Beispiel 1 beschriebenen Verfahren wurden 500 Gew.-T HDI trimerisiert. Das isolierte Isocyanatoisocyanurat hatte einen Monomergehalt von < 0,4 Gew.-% und einen NCO-Gehalt von 19,5 Gew.-%.

3a) Das isocyanatoisocyanurat wurde wie in Beispiel 1a mit der stöchiometrischen Menge ε-Caprolactam blockiert. Das erhaltene Produkt war bei Raumtemperatur weich, klebrig, nicht mahlbar und somit für den Einsatz in Pulverlacken ungeeignet.

3b) Gemäss Beispiel 1b wurde das Isocyanatoisocyanurat mit der stöchiometrischen Menge 1H-1.2.4-Triazol blockiert. Das erhaltene Produkt hatte einen Schmelzbereich von 20-25°C, war somit nicht mahlbar; der Einsatz im Pulverlack nicht möglich.

*Beispiel 4* (Vergleich)

Zu 1344 Gew.-T. MPDI/EBDI-Gemisch wurden bei 80°C unter heftigem Rühren portionsweise 134 Gew.-T. Trimethylolpropan zugesetzt. Nach der Zugabe wurde das Reaktionsgemisch noch eine Stunde bei 100°C erhitzt und anschliessend das nicht umgesetzte Diisocyanat durch Dünnschichtdestillation bei 160°C/1.33 mbar entfernt. Das Reaktionsprodukt (Rückstand) hatte einen NCO-Gehalt von 18,7 Gew.-% und einen Monomergehalt von < 0,6 Gew.-%.

4a) Die Blockierung des Verfahrensproduktes mit der stöchiometrischen Menge ε-Caprolactam führt zu einem spröden Festprodukt mit einem Schmelzbereich von 42-46°C. Der freie NCO-Gehalt lag < 0,7 Gew.-%, der praktische latente NCO-Gehalt bei 12,4 Gew.-%. Der gemahlene Vernetzer backte bereits nach kurzer Zeit wieder zusammen und konnte somit im Pulverlack nicht verwendet werden.

*Beispiel 5* (Vergleich)

Das gemäss Beispiel 4 analoge Produkt auf Basis von HDI war bei Raumtemperatur weich, klebrig und nicht mahlbar.

*Beispiel 6*

Zu 1344 Gew.-T. MPDI/EBDI-Gemisch wurden bei 120-140°C unter Verwendung von 0,05 Gew.-% DBTL 136 Gew.-T. Pentaerythrit gemäss Beispiel 4 zur Reaktion gebracht. Nach der Dünnschichtdestillation wurde ein Präpolymer mit einem Monomergehalt von < 0,7 Gew.-% und einem NCO-Gehalt von 15,2 Gew.-% erhalten.

6a) Die Blockierung des Verfahrensproduktes mit der stöchiometrischen Menge ε-Caprolactam führte zu einem spröden Feststoff mit einem Schmelzbereich von 57-61°C. Der freie NCO—Gehalt lag bei < 0,5 Gew.-% und der praktische, latente NCO-Gehalt bei 10,7 Gew.-%.

*Beispiel 7*

Zu 672 Gew.-T. MPDI/EBDI-Gemisch wurden bei 80-100°C 125 Gew.T. Di-TMP (dimeres Trimethylolpropan) gemäss Beispiel 4 zur Reaktion gebracht. Nach der Dünnschichtdestillation wurde ein Präpolymer mit einem Monomergehalt < 0,7 Gew.-% und einem NCO-Gehalt von 17,0 Gew.-% isoliert.

7a) Die Blockierung des Verfahrensproduktes mit des stöchiometrischen Menge ε-Caprolactam führt zu einem mahlbaren Feststoff mit einem Schmelzbereich von 59-64°C. Der freie NCO-Gehalt lag bei < 0,6 Gew.-% und der praktische, latente NCO-Gehalt bei 11,7 Gew.-%.

B *Polyolkomponente*

*Allgemeine Herstellungsvorschrift*

Die Ausgangskomponenten — Terephthalsäure (Ts), Dimethylterephthalat (DMT), Hexandiol-1.6 (HD), Neopentylglykol (NPG), 1.4-Dimethylolcyclohexan (DMC) und Trimethylolpropan (TMP) — wurden in einen Reaktor gegeben und mit Hilfe eines Ölbades erwärmt. Nachdem die Stoffe zum grössten Teil aufgeschmolzen waren, wurden bei einer Temperatur von 160°C 0,05 Gew.-% Di-n-butylzinnoxid als Katalysator zugesetzt. Die erste Methanolabspaltung trat bei einer Temperatur von ca. 170°C auf. Innerhalb 6-8 Stunden wurde die Temperatur auf 220°C-230°C erhöht und innerhalb weiterer 12-15 Stunden die Reaktions zu Ende geführt. Der Polyester wurde auf 200°C abgekühlt und durch Anlegen von Vakuum (1.33 mbar) innerhalb 30-45 Minuten weitgehend von flüchtigen Anteilen befreit. Während der gesamten Reaktionszeit wurde das Sumpfprodukt gerührt und ein schwacher $N_2$-Strom durch das Reaktionsgemisch geleitet.

Folgende Tabelle gibt Polyesterzusammensetzungen und die entsprechenden physikalischen und chemischen Kenndaten wieder.

| | Beispiele | | 1 | 2 | 3 |
|---|---|---|---|---|---|
| chem. u. phys. Kenndaten | Ts Mol | | 9 | 6 | 8 |
| | DMT Mol | | 9 | 6 | 7 |
| | HD Mol | | 3 | 4 | 3 |
| | NPG Mol | | 13 | 5 | 10 |
| | DMC Mol | | 3 | 3 | 2 |
| | TMP Mol | | 1 | 1 | 1 |
| Ausgangskomponenten | OH-Zahl | mg KOH/g | 50-56 | 48-52 | 32-36 |
| | Säurezahl | mg KOH/g | 3-4 | 3-4 | 3-4 |
| | Schmelzpunkt | °C | ca. 70 | ca. 80 | ca. 85 |
| | Glasumwandlungstemperatur DTA | °C | ca. 50 | ca. 55 | ca. 60 |
| | Viskosität b. 160°C mPa·s | | ~ 10 000 | ~ 15 000 | ~ 40 000 |

C *Polyurethan-Pulverlacke*

*Allgemeine Herstellungsvorschrift*

Die gemahlenen Produkte, Vernetzer, Polyester, Verlaufmittel*-Masterbatch, werden gegebenenfalls mit dem Weisspigment und gegebenenfalls Füllstoffen, in einem Kollergang innig vermischt und anschliessend im Extruder bei 100-130°C homogenisiert. Nach dem Erkalten wird das Extrudat gebrochen und mit einer Stiftmühle auf eine Korngrösse < 100 µm gemahlen. Das so hergestellte Pulver wird mit einer elektrostatischen Pulverspritzanlage bei 60 KV auf entfettete, gegebenenfalls vorbehandelte Eisenbleche appliziert und in einem Umlufttrockenschrank bei Temperaturen zwischen 160°C und 200°C eingebrannt.

* *Verlaufmittel-Masterbatch:*

Es werden 10 Gew.-% des Verlaufmittels — ein handelsübliches Copolymeres von Butylacrylat und 2-Ethylhexylacrylat — in dem entsprechenden Polyester in der Schmelze homogenisiert und nach dem Erstarren zerkleinert.

Die Abkürzungen in den folgenden Tabellen bedeuten:

SD = Schichtdicke in µm
HK = Härte n. König in sec (DIN 53 157)
HB = Härte n. Buchholz (DIN 53 153)
ET = Tiefung n. Erichsen in mm (DIN 53 156)
GS = Gitterschnittprüfung (DIN 53 151)
GG 60 ∢ = Messung des Glanzes n. Gardner (ASTM-D 523)
Imp. rev. = Impact reverse in g · m

*Beispiel 1*

*Pigmentierter Lack*

Nach dem beschriebenen Verfahren wurde der Pulverlack mit folgender Rezeptur hergestellt, appliziert und zwischen 160°C und 200°C eingebrannt.

391,9 Gew.-T. Polyester gemäss Beispiel B 1
158,1 Gew.-T. Vernetzer gemäss Beispiel A 1a
400,0 Gew.-T. Weisspigment ($TiO_2$)
50,0 Gew.-T. Verlaufmittel-Masterbatch

| Einbrenn-bedingung. | Mechanische Kenndaten | | | | | | |
|---|---|---|---|---|---|---|---|
| Zeit/Temp. min/°C | SD | HK | HB | ET | GS | Imp. rev. | GG 60 ∢ |
| 6/200 | 70-85 | 170 | 100 | 9,3-9,9 | 0 | 691,2 | 88 |
| 8/200 | 80 | 175 | 111 | >10 | 0 | >921,6 | 86 |
| 10/200 | 60-70 | 173 | 100 | >10 | 0 | >921,6 | 89 |
| 15/180 | 60-70 | 173 | 100 | >10 | 0 | >921,6 | 87 |
| 20/180 | 70 | 174 | 111 | >10 | 0 | >921,6 | 90 |
| 25/180 | 75-85 | 170 | 100 | >10 | 0 | >921,6 | 89 |
| 25/170 | 70 | 171 | 100 | 9,4-9,8 | 0 | 806,4 | 87 |
| 30/170 | 70-80 | 171 | 111 | >10 | 0 | >921,6 | 89 |
| 35/160 | 75-85 | 170 | 100 | 9.0-9.5 | 0 | 691,2 | 90 |

*Beispiel 2*

*Pigmentierter Lack*

Nach dem beschriebenen Verfahren wurde der Pulverlack mit folgender Rezeptur hergestellt, appliziert und zwischen 160°C und 200°C eingebrannt.

| | | |
|---|---|---|
| 488,7 | Gew.-T. | Polyester gemäss Beispiel B 2 |
| 171,3 | Gew.-T. | Vernetzer gemäss Beispiel A1a |
| 480,0 | Gew.-T. | Weisspigment ($TiO_2$) |
| 60,0 | Gew.-T. | Verlaufmittel-Masterbatch |

| Einbrenn-bedingung. | Mechanische Kenndaten | | | | | | |
|---|---|---|---|---|---|---|---|
| Zeit/Temp. min/°C | SD | HK | HB | ET | GS | Imp. rev. | GG 60 ∢ |
| 6/200 | 70-80 | 170 | 100 | 9,1-9,6 | 0 | 806,4 | 88 |
| 8/200 | 85-95 | 174 | 100 | >10 | 0 | >921,6 | 90 |
| 10/200 | 80 | 171 | 111 | >10 | 0 | >921,6 | 89 |
| 15/180 | 65-75 | 170 | 100 | 8,7-9,5 | 0 | 691,2 | 90 |
| 20/180 | 70-80 | 173 | 100 | >10 | 0 | >921,6 | 91 |
| 25/180 | 60-70 | 175 | 100 | >10 | 0 | 806,4 | 89 |
| 25/170 | 70-80 | 170 | 100 | 8,5-9,1 | 0 | 806,4 | 88 |
| 30/170 | 75-85 | 172 | 111 | 9,7-10,0 | 0 | >921,6 | 86 |
| 35/160 | 80-95 | 170 | 100 | 8,4-8,9 | 0 | 460,8 | 89 |

*Beispiel 3*

*Pigmentierter Lack*

Nach dem beschriebenen Verfahren wurde der Pulverlack mit folgender Rezeptur hergestellt, appliziert und zwischen 160° und 200°C eingebrannt.

| | | |
|---|---|---|
| 287,9 | Gew.-T. | Polyester gemäss Beispiel B 1 |
| 100,0 | Gew.-T. | Vernetzer gemäss Beispiel A1b |
| 282,2 | Gew.-T. | Weisspigment ($TiO_2$) |
| 35,3 | Gew.-T. | Verlaufmittel-Masterbatch |

| Einbrenn-bedingung. | Mechanische Kenndaten | | | | | | |
|---|---|---|---|---|---|---|---|
| Zeit/Temp. min/°C | SD | HK | HB | ET | GS | Imp. rev. | GG 60 ∢ |
| 6/200 | 60-70 | 170 | 100 | 9,2-9,9 | 0 | 806,4 | 89 |
| 8/200 | 70-80 | 169 | 100 | 9,4-10,5 | 0 | >921,6 | 91 |
| 10/200 | 80 | 171 | 100 | >10 | 0 | >921,6 | 87 |
| 15/180 | 75-85 | 172 | 100 | >10 | 0 | >921,6 | 88 |
| 20/180 | 60-70 | 170 | 111 | >10 | 0 | >921,6 | 90 |
| 25/180 | 70-80 | 170 | 100 | >10 | 0 | 806,4 | 88 |
| 25/170 | 70-80 | 172 | 100 | 9,7-9,9 | 0 | 691,2 | 87 |
| 30/170 | 60-70 | 170 | 100 | 9,4-9,8 | 0 | >921,6 | 90 |
| 35/160 | 75 | 169 | 111 | 9,2-9,7 | 0 | 806,4 | 91 |

*Beispiel 4*

*Pigmentierter Lack*

Nach dem beschriebenen Verfahren wurde der Pulverlack mit folgender Rezeptur hergestellt, appliziert und zwischen 160° und 200°C eingebrannt.

| | | |
|---|---|---|
| 507 | Gew.-Teile | Polyester gemäss Beispiel B 2 |
| 153 | Gew.-Teile | Vernetzer gemäss Beispiel A1b |
| 480 | Gew.-Teile | Weisspigment ($TiO_2$) |
| 60 | Gew.Teile | Verlaufmittel-Masterbatch |

| Einbrenn-bedingung. | Mechanische Kenndaten | | | | | | |
|---|---|---|---|---|---|---|---|
| Zeit/Temp. min/°C | SD | HK | HB | ET | GS | Imp. rev. | GG 60 ∢ |
| 6/200 | 70-80 | 169 | 100 | 9,2-9,9 | 0 | 691,2 | 88 |
| 8/200 | 70-80 | 172 | 100 | 9,8-10,4 | 0 | 806,4 | 90 |
| 10/200 | 60-85 | 170 | 100 | >10 | 0 | >921,6 | 91 |
| 15/180 | 80 | 171 | 100 | 9,5-10,1 | 0 | >921,6 | 87 |
| 20/180 | 75-85 | 174 | 111 | >10 | 0 | >921,6 | 89 |
| 25/180 | 70-80 | 170 | 100 | >10 | 0 | >921,6 | 88 |
| 25/170 | 60-70 | 168 | 100 | 9,1-9,4 | 0 | 691,2 | 90 |
| 30/170 | 70-80 | 171 | 111 | 9,7-10,1 | 0 | 806,4 | 91 |
| 35/160 | 70-80 | 170 | 100 | 8,5-9,2 | 0 | 691,2 | 91 |

*Beispiel 5*

*Pigmentierter Lack*

Nach dem beschriebenen Verfahren wurde der Pulverlack mit folgender Rezeptur hergestellt, appliziert und zwischen 160° und 200°C eingebrannt.

463,1 Gew.-T. Polyester gemäss Beispiel B1
196,9 Gew.-T. Vernetzer gemäss Beispiel A2a
480,0 Gew.-T. Weisspigment ($TiO_2$)
60,0 Gew.-T. Verlaufmittel-Masterbatch

| Einbrenn-bedingung. | Mechanische Kenndaten | | | | | | |
|---|---|---|---|---|---|---|---|
| Zeit/Temp. min/°C | SD | HK | HB | ET | GS | Imp. rev. | GG 60 ∢ |
| 6/200 | 70-90 | 169 | 100 | 9,9-10,1 | 0 | 806,4 | 87 |
| 8/200 | 75-85 | 174 | 100 | >10 | 0 | >921,6 | 92 |
| 10/200 | 85 | 170 | 111 | >10 | 0 | >921,6 | 89 |
| 15/180 | 70-80 | 171 | 100 | 9,4-9,7 | 0 | 691,2 | 90 |
| 20/180 | 75-85 | 174 | 111 | >10 | 0 | >921,6 | 89 |
| 25/180 | 70-85 | 170 | 100 | >10 | 0 | >921,6 | 89 |
| 25/170 | 60-75 | 168 | 100 | 9,1-9,4 | 0 | 691,2 | 91 |
| 30/170 | 70 | 172 | 100 | >10 | 0 | >921,6 | 90 |
| 35/160 | 85-90 | 170 | 100 | 8,7-9,2 | 0 | 576,0 | 90 |

*Beispiel 6*

*Pigmentierter Lack*

Nach dem beschriebenen Verfahren wurde der Pulverlack mit folgender Rezeptur hergestellt, appliziert und zwischen 160° und 200°C eingebrannt.

520,2 Gew.-T. Polyester gemäss Beispiel B 3
139,8 Gew.-T. Vernetzer gemäss Beispiel A2a
480,0 Gew.-T. Weisspigment ($TiO_2$)
60,0 Gew.-T. Verlaufmittel-Masterbatch

| Einbrenn-bedingung. | Mechanische Kenndaten | | | | | | |
|---|---|---|---|---|---|---|---|
| Zeit/Temp. min/°C | SD | HK | HB | ET | GS | Imp. rev. | GG 60 ∢ |
| 6/200 | 70 | 167 | 100 | 8,9-9,2 | 0 | 576,0 | 85 |
| 8/200 | 70-80 | 170 | 100 | 9,4-9,9 | 0 | 806,4 | 87 |
| 10/200 | 60-75 | 172 | 100 | >10 | 0 | >921,6 | 89 |
| 15/180 | 80 | 170 | 100 | 8,7-9,0 | 0 | 576,0 | 88 |
| 20/180 | 80-90 | 173 | 111 | 9,2-9,7 | 0 | 691,2 | 90 |
| 25/180 | 75-85 | 169 | 100 | 9,8-10,2 | 0 | 806,4 | 87 |
| 25/170 | 70-85 | 170 | 111 | 8,7-8,9 | 0 | 460,8 | 87 |
| 30/170 | 75-90 | 171 | 100 | 9,5-9,7 | 0 | 691,2 | 88 |
| 35/160 | 85 | 169 | 100 | 8,4-8,9 | 0 | 460,8 | 89 |

*Beispiel 7*

*Pigmentierter Lack*

Nach dem beschriebenen Verfahren wurde der Pulverlack mit folgender Rezeptur hergestellt, appliziert und zwischen 160° und 200°C eingebrannt.

376,4 Gew.-T. Polyester gemäss Beispiel B1
173,6 Gew.-T. Vernetzer gemäss Beispiel A6a
400,0 Gew.-T. Weisspigment ($TiO_2$)
50,0 Gew.-T. Verlaufmittel-Masterbatch

| Einbrenn-bedingung. | Mechanische Kenndaten | | | | | | |
|---|---|---|---|---|---|---|---|
| Zeit/Temp. min/°C | SD | HK | HB | ET | GS | Imp. rev. | GG 60 ∢ |
| 6/200 | 80-90 | 169 | 100 | 7,9-8,7 | 0 | 460,8 | 80 |
| 8/200 | 80-90 | 173 | 100 | 9,5-10,1 | 0 | 691,2 | 75 |
| 10/200 | 70-75 | 170 | 111 | >10 | 0 | 806,4 | 79 |
| 15/180 | 80-90 | 168 | 111 | 5,9-7,3 | 0 | 230,4 | 84 |
| 20/180 | 80 | 172 | 100 | 7,4-7,7 | 0 | 576,0 | 83 |
| 25/180 | 85-95 | 170 | 100 | 8,4-9,1 | 0 | 691,2 | 79 |
| 25/170 | 75-85 | 171 | 100 | 4,3-5,1 | 0 | 115,2 | 80 |
| 30/170 | 90 | 173 | 111 | 5,7-6,9 | 0 | 345,6 | 82 |
| 35/160 | 85-95 | 169 | 100 | 4,4-5,1 | 0 | 115,2 | 83 |

*Beispiel 8*

*Pigmentierter Lack*

Nach dem beschriebenen Verfahren wurde der Pulverlack mit folgender Rezeptur hergestellt, appliziert und zwischen 160° und 200°C eingebrannt.

511,2 Gew.-T. Polyester gemäss Beispiel B 3
148,8 Gew.-T. Vernetzer gemäss Beispiel A6a
480,0 Gew.-T. Weisspigment ($TiO_2$)
60,0 Gew.-T. Verlaufmittel-Masterbatch

| Einbrenn-bedingung. | Mechanische Kenndaten | | | | | | |
|---|---|---|---|---|---|---|---|
| Zeit/Temp. min/°C | SD | HK | HB | ET | GS | Imp. rev. | GG 60 ∢ |
| 6/200 | 70 | 169 | 100 | 6,9-7,5 | 0 | 230,4 | 77 |
| 8/200 | 85-95 | 174 | 100 | 7,7-8,4 | 0 | 576,0 | 80 |
| 10/200 | 80-90 | 170 | 111 | 7,3-8,9 | 0 | 691,2 | 79 |
| 15/180 | 75-90 | 170 | 100 | 7,1-7,8 | 0 | 345,6 | 82 |
| 20/180 | 85-95 | 172 | 111 | 6,9-7,9 | 0 | 691,2 | 77 |
| 25/180 | 90 | 174 | 100 | 7,4-8,1 | 0 | 576,0 | 78 |
| 25/170 | 80-90 | 169 | 100 | 4,1-4,9 | 0 | 460,8 | 79 |
| 30/170 | 80-90 | 169 | 100 | 5,3-6,7 | 0 | 576,0 | 80 |
| 35/160 | 95-100 | 170 | 100 | 4,6-5,2 | 0 | 354,6 | 79 |

*Beispiel 9*

*Pigmentierter Lack*

Nach dem beschriebenen Verfahren wurde der Pulverlack mit folgender Rezeptur hergestellt, appliziert und zwischen 160° und 200°C eingebrannt.

484,3 Gew.T. Polyester gemäss Beispiel B2
175,7 Gew.-T. Vernetzer gemäss Beispiel A7a
480,0 Gew.-T. Weisspigment ($TiO_2$)
60,0 Gew.-T. Verlaufmittel-Masterbatch

| Einbrenn-bedingung. | Mechanische Kenndaten | | | | | | |
|---|---|---|---|---|---|---|---|
| Zeit/Temp. min/°C | SD | HK | HB | ET | GS | Imp. rev. | GG 60 ∢ |
| 6/200 | 80-85 | 169 | 100 | 8,7-9,2 | 0 | 576,0 | 85 |
| 8/200 | 90 | 170 | 100 | 9,2-9,5 | 0 | 691,2 | 84 |
| 10/200 | 80-90 | 174 | 100 | 9,0-9,3 | 0 | 691,2 | 80 |
| 15/180 | 70-85 | 169 | 100 | 7,5-8,2 | 0 | 460,8 | 84 |
| 20/180 | 85 | 174 | 100 | 7,9-8,7 | 0 | 345,6 | 82 |
| 25/180 | 75-90 | 172 | 100 | 8,0-8,9 | 0 | 691,2 | 86 |
| 25/170 | 80-95 | 171 | 100 | 5,2-6,0 | 0 | 345,6 | 84 |
| 30/170 | 70-90 | 174 | 100 | 5,7 | 0 | 345,6 | 80 |
| 35/160 | 80-95 | 169 | 100 | 4,9-5,9 | 0 | 230,4 | 84 |

*Beispiel 10*

*Pigmentierter Lack*

Nach dem beschriebenen Verfahren wurde der Pulverlack mit folgender Rezeptur hergestellt, appliziert und zwischen 160° und 200°C eingebrannt.

522,1 Gew.-T. Polyester gemäss Beispiel B3
137,9 Gew.-T. Vernetzer gemäss Beispiel A7a
480,0 Gew.-T. Weisspigment ($TiO_2$)
60,0 Gew.-T. Verlaufmittel-Masterbatch

| Einbrenn-bedingung. | Mechanische Kenndaten | | | | | | |
|---|---|---|---|---|---|---|---|
| Zeit/Temp. min/°C | SD | HK | HB | ET | GS | Imp. rev. | GG 60 ∢ |
| 6/200 | 70-90 | 168 | 100 | 8,1-8,8 | 0 | 460,8 | 83 |
| 8/200 | 85 | 174 | 100 | 8,5-8,9 | 0 | 691,2 | 86 |
| 10/200 | 80-90 | 170 | 100 | 8,7-9,1 | 0 | 576,0 | 82 |
| 15/180 | 80-90 | 170 | 100 | 7,2-7,9 | 0 | 345,6 | 80 |
| 20/180 | 70-85 | 173 | 100 | 7,4-7,8 | 0 | 806,4 | 84 |
| 25/180 | 60-75 | 169 | 100 | 8,2-8,8 | 0 | 691,2 | 81 |
| 25/170 | 60-70 | 169 | 100 | 5,4-5,9 | 0 | 345,6 | 84 |
| 30/170 | 70-85 | 172 | 100 | 5,7-6,7 | 0 | 576,0 | 83 |
| 35/160 | 85-90 | 168 | 100 | 4,9-5,3 | 0 | 230,4 | 82 |

D *Epoxidharz-Pulverlack*

D 1. *Eingesetzte Epoxidharze zur Herstellung der Pulverlacke*

Es wurden zwei Epoxidharze auf Basis eines Addukts aus 2.2-Bis-(4-hydroxylphenyl)-propan (Dian) und Epichlorhydrin verwendet, die erst einer HCl—Abspaltung unterworfen und danach mit weiterem Dian umgesetzt wurden.

Nach Angaben des Herstellers hatten die Epoxidharze folgende physikalische Daten:

| | | |
|---|---|---|
| D 1.1 | EP-Äquivalentgewicht | 900-1 000 |
| | EP-Wert | 0,10-0,11 |
| | OH-Wert | 0,34 |
| | Schmelzbereich | 96-104°C |

| | | |
|---|---|---|
| D 1.2 | EP-Äquivalentgewicht | 1 700-2 000 |
| | EP-Wert | 0,05-0,059 |
| | OH-Wert | 0,36 |
| | Schmelzbereich | 125-132°C |

*Beispiel* D 1.3

*Pigmentierter Lack*

Nach dem in Beispiel C beschriebenen Verfahren wurde der Pulverlack mit folgender Rezeptur hergestellt, appliziert und zwischen 180 und 200°C eingebrannt.

| | | |
|---|---|---|
| 109,8 | Gew.-T. | Epoxid gemäss Beispiel D 1.2 |
| 87,2 | Gew.-T. | Epoxid gemäss Beispiel D 1.1 |
| 128,0 | Gew.-T. | Vernetzer gemäss A1 |
| 150,0 | Gew.-T. | Weisspigment ($TiO_2$) |
| 25,0 | Gew.-T. | Verlaufmittel-Masterbatch (10% Modaflow in Epoxid gemäss D 1.1) |

| Einbrenn-bedingung. | Mechanische Kenndaten | | | | | | |
|---|---|---|---|---|---|---|---|
| Zeit/Temp. min/°C | SD | HK | HB | ET | GS | Imp. rev. | GG 60 ∢ |
| 15/200 | 60 | 192 | 111 | 7,1-8,0 | 0 | 576,0 | 85 |
| 20/200 | 70-80 | 191 | 125 | 7,2-8,3 | 0 | 691,2 | 85 |
| 25/180 | 60-70 | 195 | 111 | 5,5-6,5 | 0 | 345,6 | 8 |
| 30/180 | 70-85 | 197 | 111 | 5,8-6,9 | 0 | 460,8 | 87 |

**Patentansprüche**

1. Pulverförmige Überzugsmittel aus Polyolen und Polyisocyanaten und gegebenenfalls Zuschlagstoffen, dadurch gekennzeichnet, dass als Polyisocyanatkomponente blockiertes 2-Methylpentandiisocyanat-1.5 bzw. Gemische aus 88 bis 99 Gew.-% 2-Methylpentandiisocyanat-1.5 und 12 bis 1 Gew.-% 2-Ethyl-butandiisocyanat-1.4 der Formeln I und II

$O=C=N\text{-}CH_2\text{-}CH\text{-}CH_2\text{-}CH_2\text{-}CH_2\text{-}N=C=O$ (MPDI) I
|
$CH_3$

$O=C=N\text{-}CH_2\text{-}CH_2\text{-}CH\text{-}CH_2\text{-}N=C=O$ (EBDI) II
|
$C_2H_5$

in Form des Trimerisats, gegebenenfalls zusammen mit Oligomeren oder in Form des Umsetzungsproduktes mit tetra- oder höhermolekularen Polyolen eingesetzt wird, und der latente NCO-Gehalt der blockierten Isocyanatkomponente 7 bis 18 Gewichtsprozent, vorzugsweise 9,5 bis 16 Gewichtsprozent, der freie Rest-NCO-Gehalt ≤ 2 Gwichtsprozent, vorzugsweise ≤ 1 Gewichtsprozent, beträgt.

2. Pulverförmige Überzugsmittel nach Anspruch 1, dadurch gekennzeichnet, dass das Trimerisat des MPDI oder MPDI/EBDI-Gemisches, gegebenanfalls zusammen mit Oligomeren, einen NCO-Gehalt von 14 bis 21 Gewichtsprozent, vorzugsweise 15,5 bis 19,5 Gewichtsprozent besitzt.

3. Pulverförmige Überzugsmittel nach Anspruch 1, dadurch gekennzeichnet, dass das Umsetzungsprodukt des MPDI oder MPDI/EBDI-Gemisches mit tetra- oder höherfunktionellen Polyolen einen NCO-Gehalt von 10 bis 22 Gewichtsprozent, vorzugsweise von 12 bis 19 Gewichtsprozent, besitzt.

4. Pulverlacke nach den Ansprüchen 1 bis 3, dadurch gekennzeichnet, dass das Bindemittelverhältnis

| | |
|---|---|
| 9 bis 45 Gew.-% | MPDI oder MPDI/EBDI-Komponente und |
| 91 bis 55 Gew.-% | hydroxylhaltiger Polyester |

ist und dessen OH/NCO-Verhältnis 1:0,8 bis 1:1,2, vorzugsweise 1:0,95 bis 1:1,1, beträgt.

5. Pulverlacke nach den Ansprüchen 1 bis 3, dadurch gekennzeichnet, dass die Polykomponente ein Epoxid ist und das OH/NCO-Verhältnis 1:0,25 bis 1:0,75, vorzugsweise 1:0,35 bis 1:0,55, beträgt.

**Claims**

1. Pulverulent coating agent of polyols and polyisocyanates and, optionally, additives, characterized in that the polyisocyanate component used is blocked 2-methylpentane-1,5-diisocyanate or mixtures of 88 to 99% by weight of 2-methylpentane-1,5-diisocyanate and 12 to 1% by weight of 2-ethylbutane-1,4-diisocyanate of the formulae I and II

$O=C=N\text{-}CH_2\text{-}CH\text{-}CH_2\text{-}CH_2\text{-}CH_2\text{-}N=C=O$ (MPDI) I
|
$CH_3$

$O=C=N\text{-}CH_2\text{-}CH_2\text{-}CH\text{-}CH_2\text{-}N=C=O$ (EBDI) II
|
$C_2H_5$

in the form of the trimer, optionally together with oligomers, or in the form of the reaction product with tetramolecular or higher-molecular polyols, and the latent NCO content of the blocked isocyanate component is 7 to 18% by weight, preferably 9.5 to 16% by weight, and the free residual NCO content is ≤ 2 per cent by weight, preferably ≤ 1 per cent by weight.

2. Pulverulent coating agent according to Claim 1, characterized in that the trimer of MPDI or MPDI/EBDI mixture, optionally together with oligomers, has an NCO content of 14 to 21 per cent by weight, preferably 15.5 to 19.5 per cent by weight.

3. Pulverulent coating agent according to Claim 1, characterized in that the reaction product of MPDI or the MPDI/EBDI mixture with tetrafunctional or higherfunctional polyols has an NCO content of 10 to 22 per cent by weight, preferably of 12 to 19 per cent by weight.

4. Powder coating according to Claims 1 to 3, characterized in that the binder ratio is 9 to 45% by weight of MPDI or MPDI/EBDI component and 91 to 55% by weight of hydroxyl-containing polyesters, and its OH/NCO ratio is 1:0.8 to 1:1.2, preferably 1:0.95 to 1:1.1.

5. Powder coatings according to Claims 1 to 3, characterized in that the polyol component is an epoxide and the OH/NCO ratio is 1:0.25 to 1:0.75, preferably 1:0.35 to 1:0.55.

**Revendications**

1. Produit de revêtement pulvérulent constitué de polyols et de polyisocyanates ainsi qu'éventuellement de substances d'addition, produit caractérisé en ce qu'il est mis en œuvre comme composants du polyisocyanate du 2-Methyl-pentandiisocyanate-1.5 ou bien des mélanges de 88 à 99% en poids de 2-Methylpentandiisocyanate-1.5 et de 12 à 1% en poids de 2-Ethyl-butandiisocyanate-1.4 des formules I et II suivantes:

$O=C=N\text{-}CH_2\text{-}CH\text{-}CH_2\text{-}CH_2\text{-}CH_2\text{-}N=C=O$ (MPDI) I
|
$CH_3$

$O=C=N\text{-}CH_2\text{-}CH_2\text{-}CH\text{-}CH_2\text{-}N=C=O$ (EBDI) II
|
$C_2H_5$

sous forme du trimerisat, éventuellement en même temps que des oligomères, ou bien sous la forme du produit de transformation avec des tétrapolyols ou des polyols de poids molécuaire plus élevé, tandis que la teneur en NCO latent des composants bloqués d'isocyanates est de 7 à 18% en poids, de préférence 9,5 à 16% en poids, et que la teneur résiduelle en NCO libre est inférieure ou égale à 2% en poids, de préférence inférieure ou égale à 1%, en poids.

2. Produit de revêtement pulvérulent selon la revendication 1, caractérisé en ce que le trimérisat du MPDI ou bien du mélange MPDI/EBDI, éventuellement en même temps que des oligomères, a une teneur en NCO de 14 à 21% en poids, de préférence de 15,5 à 19,5% en poids.

3. Produit de revêtement pulvérulent selon la revendication 1, caractérisé en ce que le produit de transformation du MPDI ou bien du mélange MPDI/EBDI avec des tétrapolyols ou des polyols de

fonction plus élevée, a une teneur en NCO de 10 à 22% en poids, de préférence de 12 à 19% en poids.

4. Vernis pulvérulent selon les revendications 1 à 3, caractérisé en ce que les proportions du liant sont de 9 à 45% en poids de MPDI ou bien de composants MPDI/EBDI et de 91 à 55% en poids de polyester contenant des hydroxyles, et que sa proportion OH/NCO est de 1:0,8 à 1:1,2, de préférence de 1:0,95 à 1:1,1.

5. Vernis pulvérulent selon les revendications 1 à 3, caractérisé en ce que le composant polyol est une résine époxy et que la proportion OH/NCO est 1:0,25 à 1:0,75, de préférence 1:0,35 à 1:0,55.